Europäisches Patentamt

European Patent Office

Office européen des brevets

(19)

(11) Veröffentlichungsnummer: **0 315 812 B1**

# (12) EUROPÄISCHE PATENTSCHRIFT

(45) Veröffentlichungstag der Patentschrift: **07.10.92**

(51) Int. Cl.⁵: **C07F 9/53**

(21) Anmeldenummer: **88117522.8**

(22) Anmeldetag: **21.10.88**

(54) **Verfahren zur Herstellung von tertiären Phosphanoxiden.**

(30) Priorität: **07.11.87 DE 3737938**

(43) Veröffentlichungstag der Anmeldung:
**17.05.89 Patentblatt 89/20**

(45) Bekanntmachung des Hinweises auf die
Patenterteilung:
**07.10.92 Patentblatt 92/41**

(84) Benannte Vertragsstaaten:
**BE CH DE FR GB IT LI NL**

(56) Entgegenhaltungen:

**THE JOURNAL OF ORGANIC CHEMISTRY,
Band 27, Nr. 5, 11. Mai 1962, Seiten
1817-1823, American Chemical Society; P.T.
KEOUGH et al.: "Reactions of phosphines
with cyclic carbonate esters"**

(73) Patentinhaber: **HOECHST AKTIENGESELL-
SCHAFT
Postfach 80 03 20
W-6230 Frankfurt am Main 80(DE)**

(72) Erfinder: **Svara, Jürgen, Dr.
Mainstrasse 36
W-5000 Köln(DE)**
Erfinder: **Weferling, Norbert, Dr.
Schaesbergstrasse 13
W-5030 Hürth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die vorliegende Erfindung betrifft ein Verfahren zur Herstellung von tertiären Phosphanoxiden der allgemeinen Formel

$$(CH_3)_n R_{3-n} P = O \qquad (I)$$

in der R lineare oder verzweigte Alkyl-, Alkenyl-, cyclische oder polycyclische Alkyl- oder Alkenyl-, Arylalkyl- oder Alkylarylgruppen mit 1 bis 24 Kohlen-stoffatomen und n eine ganze Zahl von 1 bis 3 bedeuten.

Tertiäre Phosphanoxide gewinnen zunehmend technische Bedeutung als Emulgatoren oder Mittel zur Oberflächenbehandlung von Metallen, sowie als Extraktionsmittel für organische Substanzen oder in der Hydrometallurgie. Es hat daher bislang nicht an Versuchen gefehlt, Wege zur Herstellung dieser Verbindungen zu finden.

So ist bekannt, tertiäre Phosphinoxide z. B. durch Oxidation von tertiären Phosphanen, durch thermische Zersetzung von quartären Phosphoniumhydroxiden oder durch alkalische Hydrolyse von quartären Phosphonium-halogeniden herzustellen (G.M. Kosolapoff/L. Maier: Organic Phosphorus Compounds, Vol. 3, Wiley-Interscience, New York (1972)). Andere Verfahren verwenden die Umsetzung von Phosphorhalogeniden mit organometallischen Verbindungen oder die Anlagerung von Olefinen, Aldehyden oder Ketonen an primäre oder sekundäre Phosphanoxide.

Diesen Verfahren haftet der Nachteil an, daß ihre Übertragung in den technischen Maßstab kaum durchführbar ist oder daß sie auf Ausgangsverbindungen basieren, deren Herstellung über mehrere Verfahrensstufen läuft und daher sehr aufwendig ist.

Überraschenderweise wurde nun ein neuer Weg gefunden, der in einer Stufe und mit hohen Ausbeuten zu den eingangs beschriebenen Phosphanoxiden führt, die auf diese Weise mit großer Reinheit anfallen. Dieses erfindungsgemäße Verfahren besteht im einzelnen darin, daß man primäre oder sekundäre Phosphane der allgemeinen Formel

$$R_{3-n} PH_n \qquad (II)$$

in der R die oben angegebene und n die Bedeutung von 1 oder 2 hat, mit Dimethylcarbonat unter erhöhtem Druck bei erhöhter Temperatur umsetzt.

Vorteilhafterweise führt man die Umsetzung bei einer Temperatur von 150 bis 250°C und bei einem Druck von 2 bis 100 bar durch.

Es empfiehlt sich, daß man pro zu alkylierenderP-H-Funktion mindestens 1 Mol Dimethylcarbonat einsetzt.

Die Reaktion läßt sich ohne Lösungsmittel oder in günstiger Weise in einem Überschuß an Dimethylcarbonat durchführen. Es können aber auch übliche organische Lösungsmittel, wie Methanol oder Toluol, zum Einsatz kommen.

Die Isolierung des Reaktionsprodukts kann nach Ablassen und Verbrennung der gasförmigen Nebenprodukte zum Beispiel durch fraktionierte Destillation des Rückstandes erfolgen, wobei überschüssiges Dimethylcarbonat wiedergewonnen und einem nächsten Ansatz zugeführt werden kann.

Wenn die physikalischen Eigenschaften des Produktes es verlangen, kann die Aufarbeitung auch auf einem anderen, dem Fachmann bekannten Weg, wie z. B. Kristallisation oder Sublimation, erfolgen.

Umsetzungen von primären und sekundären Phosphanen mit organischen Carbonaten wurden selten, solche mit Dimethylcarbonat noch gar nicht in der Literatur beschrieben. Bekannt ist, daß Dibutylphosphan mit cyclischen Kohlensäureestern (Ethylencarbonat, Propylencarbonat, Vinylencarbonat) zu verbrückten, tertiären Alkylen-bis (phosphanoxiden) reagiert (Keough, P.T.; Grayson , M.; J. org. chem. 1962, 27, 1817).

Das Wesen der vorliegenden Erfindung soll durch die folgenden Beispiels näher erläutert werden.

Beispiele

Primäres oder sekundäres Phosphan und Dimethylcarbonat, sowie gegebenenfalls ein Lösungsmittel werden unter Schutzgas ($N_2$, Ar) in einen 500-ml-Laborautoklaven eingebracht und unter Magnetrühren erhitzt. Ein Ansteigen des Innendrucks zeigt das Einsetzen der Reaktion an. Nach Beendigung der Umsetzung kühlt man ab und entspannt die gasförmigen Nebenprodukte über ein Verbrennungsrohr. Der flüssige Rückstand wird der Destillation unterworfen, wobei nicht umgesetztes Dimethylcarbonat bei Normaldruck, das tertiäre Phosphanoxid im allgemeinen unter vermindertem Druck erhalten wird. Bei hochschmelzenden Produkten wird, nach Abtrennen niedrigsiedender Produkte, der feste Rückstand sublimiert.

Die jeweiligen Reaktionsbedingungen sind der nachfolgenden Tabelle zu entnehmen.

Tabelle

| Produkt | Phosphan [g] (mmol) | Dimethylcarbonat [g] (mmol) | Bad-Temp. [°C] | Reaktionszeit [h] | Enddruck [bar] | Umsatz [%] | Ausbeute 2) [g] ([%]) | Siedepunkt [°C] (mbar) | $^{31}$P-NMR [ppm] |
|---|---|---|---|---|---|---|---|---|---|
| $O=C_4H_9P(CH_3)_2$ | sek-Butylphosphan 90,1 (1000) | 270,2 (3000) | 225 | 11 | 49 | 66 | 38,3 (29) | 98 (1) | 46,4 |
| $O=C_8H_{17}P(CH_3)_2$ | n-Octylphosphan 37,8 (259) | 117,6 (1306) | 220 | 3 | 31 | 77 | 35,1 (67) | 145 (1) | 45,7 |
| $O=C_{16}H_{33}P(CH_3)_2$ | Hexadecylphosphan 86,0 (333) | 120,0 (1332) | 225 | 5 | 51 | 100 | 74,3 (74) | 173 (0,3) | 41,6 |
| $O=(C_4H_9)_2PCH_3$ | Di-n-butylphosphan 54,1 (370) | 83,3 (925) | 230 | 6 | 27 | 100 | 41,7 (64) | 120-130 (1) | 46,3 |
| $O=(C_6H_{11})_2PCH_3$ | Dicyclohexylphosphan 119,1 (602) | 108,4 (1203) | 230 | 4 | 48 | 95 | 94,2 (79) | 135 (1) | 50,6 |
| 9-Phosphabicyclo[3,3,1] (CH₃) | 9-Phosphabicyclo-[3,3,1]- und [4,2,1]-nonan 73,3 (515) | 92,8 (1030) | 220 | 19 | 51 | 100 | 69,8 (78) | 120 (1) 3) | 65,8/ 39,9 |

1) Isomerengemisch
2) bez. auf eingesetzte Menge
3) Produkt wird sublimiert

3

**Patentansprüche**

1. Verfahren zur Herstellung von tertiären Phosphanoxiden der allgemeinen Formel

$$(CH_3)_nR_{3-n}P = O \quad (I)$$

in der R lineare oder verzweigte Alkyl-, Alkenyl-, cyclische oder polycyclische Alkyl- oder Alkenyl-, Arylalkyl- oder Alkylarylgruppen mit 1 bis 24 Kohenstoffatomen und n eine ganze Zahl von 1 bis 3 bedeuten, dadurch gekennzeichnet, daß man primäre oder sekundäre Phosphane der allgemeinen Formel

$$R_{3-n}PH_n \quad (II)$$

in der R die oben angegebene und n die Bedeutung von 1 oder 2 hat, mit Dimethylcarbonat unter erhöhtem Druck bei erhöhter Temperatur umsetzt.

2. Verfahren nach Anspruch 1, dadurch gekennzeichnet, daß man die Umsetzung bei einer Temperatur von 150 bis 250°C durchführt.

3. Verfahren nach Anspruch 1 oder 2, dadurch gekennzeichnet, daß man die Umsetzung bei einem Druck von 2 bis 100 bar durchführt.

4. Verfahren nach mindestens einem der Ansprüche 1 bis 3, dadurch gekennzeichnet, daß man pro zu alkylierender P-H-Funktion mindestens 1 Mol Dimethylcarbonat einsetzt.

5. Verfahren nach mindestens einem der Ansprüche 1 bis 4, dadurch gekennzeichnet, daß man die Umsetzung in einem Überschuß an Dimethylcarbonat durchführt.

6. Verfahren nach mindestens einem der Ansprüche 1 bis 5, dadurch gekennzeichnet, daß man die Umsetzung in einem üblichen organischen Lösungsmittel durchführt.

**Claims**

1. A process for the preparation of tertiary phosphine oxides of the formula

$$(CH_3)_nR_{3-n}P = O \quad (I)$$

in which R denotes linear or branched alkyl, alkenyl, cyclic or polycyclic alkyl or alkenyl, arylalkyl or alkylaryl groups having 1 to 24 carbon atoms, and n denotes an integer from 1 to 3, which comprises reacting primary or secondary phosphines of the formula

$$R_{3-n}PH_n \quad (II)$$

in which R has the abovementioned meaning and n denotes 1 or 2, with dimethyl carbonate under elevated pressure at elevated temperature.

2. The process as claimed in claim 1, wherein the reaction is carried out at a temperature from 150 to 250°C.

3. The process as claimed in claim 1 or 2, wherein the reaction is carried out at a pressure from 2 to 100 bar.

4. The process as claimed in at least one of claims 1 or 3, wherein at least 1 mole of dimethyl carbonate is employed per P-H function to be alkylated.

5. The process as claimed in at least one of claims 1 to 4, wherein the reaction is carried out in an excess of dimethyl carbonate.

6. The process as claimed in at least one of claims 1 to 5, wherein the reaction is carried out in a customary organic solvent.

**Revendications**

1. Procédé de préparation d'oxydes de phosphanes tertiaires de formule générale :

$$(CH_3)_nR_{3-n}P = O \qquad (I)$$

dans laquelle R représente des groupes alkyle ou alcényle linéaires ou ramifiés, alkyle ou alcényle cycliques ou polycycliques, arylalkyle ou alkylaryle contenant 1 à 24 atomes de carbone et n est un nombre entier allant de 1 à 3 caractérisé en ce que l'on fait réagir des phosphanes primaires ou secondaires de formule générale :

$$R_{3-n}PH_n \qquad (II)$$

dans laquelle R a les significations indiquées ci-dessus et n est égal à 1 ou 2, avec le carbonate de diméthyle, sous pression et à température élevée.

2. Procédé selon la revendication 1, caractérisé en ce que l'on effectue la réaction à une température de 150 à 250°C.

3. Procédé selon la revendication 1 ou 2, caractérisé en ce que l'on effectue la réaction sous une pression de 2 à 100 bar.

4. Procédé selon au moins une des revendications 1 à 3, caractérisé en ce que l'on met en oeuvre au moins 1 mol de carbonate de diméthyle par fonction P-H à alkyler.

5. Procédé selon au moins une des revendications 1 à 4, caractérisé en ce que l'on effectue la réaction dans un excès de carbonate de diméthyle.

6. Procédé selon au moins une des revendications 1 à 5, caractérisé en ce que l'on effectue la réaction dans un solvant organique usuel.